# EUROPÄISCHE PATENTSCHRIFT

(11) **EP 0 768 741 B1**
(45) Veröffentlichungstag und Bekanntmachung des Hinweises auf die Patenterteilung: **01.08.2001**
(21) Anmeldenummer: 96115760.9
(22) Anmeldetag: 02.10.1996
(51) Int. Cl.: H02B 7/06

(54) **Transportable Raumzelle als Umspannstation**
Transportable container for transformer station
Cellule transportable pour poste transformateur

(30) Priorität: 13.10.1995 DE 19538268; 12.04.1996 DE 19614593
(43) Veröffentlichungstag der Anmeldung: 16.04.1997
(73) Patentinhaber: Betonbau GmbH, D-68753 Waghäusel (DE)
(72) Erfinder: Primus, Illo-Frank, Dipl.-Ing., D-76327 Pfinztal 1 (DE); Kaute, Christoph, Dipl.-Ing., D-76344 Leopoldshafen (DE); Herrmann, Rainer, D-75031 Eppingen (DE)
(74) Vertreter: Hiebsch, Gerhard F., Dipl.-Ing.

(56) Entgegenhaltungen:
- EP-A- 0 209 027
- CH-A- 682 961
- DE-A- 2 401 532
- DE-A- 2 706 959
- FR-A- 2 341 972
- FR-A- 2 417 196
- US-A- 4 644 095
- US-A- 4 821 143

## Beschreibung

Die Erfindung betrifft eine transportable Raumzelle in Form einer teilweise in Erdreich abgesenkten, einen Innenraum für einen Transformator, für Hoch-, Mittel- und/oder Niederspannungsschaltgeräte od. dgl. Anlagenteile enthaltenden Umspannstation mit vier Wandteilen, die gegebenenfalls monolithisch mit einer Bodenplatte verbunden -- also an diese angegossen -- sind, sowie mit einer Überdachung aus beidseits eines den Stationsinnenraum übergreifenden, sich nach oben öffnenden Rinnenträgers angeordneten und getrennt um zueinander parallele Gelenke schwenkbaren Deckeln.

Die DE-A-24 01 532 offenbart eine begehbare Mittelspannungsnetzstation aus Fertigteilen, bei der mehrere untereinander gleiche Elemente jeweils L-förmigen Querschnittes ein haubenförmiges Dach aus glasfaserverstärktem Kunststoff oder aus korrosionsfestem Stahl- oder Aluminiumblech bilden; die Elemente sind an einem -- auch als Regenauffangrinne dienenden -- U-Träger beidseits angelenkt, der sich auf den Stirnwänden der Station abstützt. Die in Schließstellung vertikalen Schürzenabschnitte der Elemente sind mit zwischen daran vertikal vorgesehenen Versteifungsrippen eingearbeiteten Schlitzen sowie mit Schließorganen ausgestattet und stützen sich auf den entsprechenden Wandoberkanten ab. Zudem ist der besseren Belüftung halber durch einen überlappenden Überstand des Dachelements an der Auflage zum Betonunterteil der Station ein Luftspalt vorgesehen. Bei paarweise hochgeklappten Elementen ist der Einstieg über eine Schwenkleiter oder das Auswechseln der Aggregate möglich.

Der Zelleninnenraum einer beispielsweise aus der Schrift zum DE-U-83 34 221 bekannten Umspannstation dieser Art ist in einen Umspannraum zur Aufnahme des Transformators mit darunterliegender Ölwanne sowie einen Schaltraum zur Aufnahme jener Hoch-, Mittel- oder Niederspannungsschaltgeräte aufgeteilt. Solche Stationen werden als sog. Fertigstationen werkseitig mit den notwendigen Schaltgeräten -- mit Ausnahme des Transformators --, Befestigungsschienen und der kompletten elektrischen Installation samt Erdung ausgerüstet, so daß an der Baustelle nur noch der üblicherweise auf Rädern montierte Transformator auf in der Station vorhandenen Schienen in den Zelleninnenraum eingeschoben werden muß. Letzterer ist dank zweier horizontal schwenkbarer Türen zugänglich, die Teil einer aus Profilen und Platten bestehenden Seitenwand sind.

Die DE-A-31 10 304 offenbart eine Raumzelle als elektrische Netzstation, die untere Seitenwände und einen auf diesen aufliegenden Zwischenboden aufweist. Vom Zwischenboden erstreckt sich eine Zwischenwand als Druckschild aufwärts, die in vorbestimmtem Abstand in den Innenraum der Netzstation hineingezogen und bis knapp unter die Dachplatte der Station geführt ist.

Nicht begehbare sog. Kleinstationen sind der EP-B-196 624 zu entnehmen mit einer i. w. an der Bodenoberfläche oder Erdgleiche endenden Bodenwanne aus Beton, auf der sich ein Gehäusekörper aus einem Stabgerüst für Gußausfachungen, Türen od. dgl. erhebt.

In Kenntnis dieses Standes der Technik hat sich der Erfinder das Ziel gesetzt, eine derartige Kleinstation auf einfache und kostengünstige Weise herzustellen, auszurüsten sowie einzusetzen. Zudem sollen die Anpaßbarkeit an unterschiedliche Typen der elektrischen Einbauelemente erleichtert und die Betriebssicherheit erhöht werden.

Zur Lösung dieser Aufgabe führt die Lehre des unabhängigen Patentanspruches; die Unteransprüche geben vorteilhafte Weiterbildungen an.

Erfindungsgemäß besteht die Überdachung aus zwei -- getrennt um die zueinander parallelen Gelenke -- schwenkbaren Deckeln, deren einer mit einem Firstabschnitt an einem den Zelleninnenraum übergreifenden, sich nach oben öffnenden Rinnenträger angelenkt ist und einen aus der Ebene des Firstabschnittes des Deckels gewinkelten Schürzenabschnitt aufweist; letzterer bildet in geschlossenem Zustand der Umspannstation den oberen Teil eines Wandteils, dies insbesondere an der Frontwand, wobei der Deckelrand und der anschließende Deckel an den Kanten der Wandteile mit diesen einen Strömungsweg vom oder zum Zelleninnenraum begrenzen.

Die erfindungsgemäße Raumzelle sieht weiterhin vor, daß zumindest eine von dem/den Deckel/n bzw. dem Firstabschnitt angebotene Oberfläche in einem Neigungswinkel aus der Horizontalen geneigt ist. Dieser Neigungswinkel ist bevorzugt etwa 2° bis 8°, weiter bevorzugt etwa 3° bis 5°.

Der erfindungsgemäße Schürzenabschnitt ist ferner bevorzugt durch ein Kantenprofil od.dgl. Element am Firstabschnitt festgelegt oder er wird aus der Ebene des Firstabschnitts abgekantet - und ist dann mit diesem einstückig. Jedoch ist es auch denkbar, den Schürzenabschnitt gesondert zu fertigen und in der abgewinkelten Stellung am Firstabschnitt dauerhaft festzulegen.

Nach einem weiteren Merkmal der Erfindung soll der Winkel zwischen dem Firstabschnitt und dem Schürzenabschnitt des Deckels größer als 90° sein, um sein Fluchten mit dem zu ergänzenden Wandteil einerseits und die Neigungslage des Firstabschnitts anderseits zu gewährleisten.

Als besonders günstig hat es sich erwiesen, die Dachflächen in einem Neigungswinkel aus der Horizontalen zu neigen, bevorzugt jeweils vom Rinnenträger zu den diesem parallelen Wandteilen in Schließlage abwärts zu richten.

Der aus einer Platte -- bevorzugt aus einer Metallplatte wie einem Aluminiumblech -- geformte Deckel ist mit einem in Verschlußstellung etwa parallel zu den Wandteilen und zu diesen außen in Abstand verlaufenden, die Wandteile in äußerem Abstand übergreifenden Deckelrand ausgestattet. Dieser ist in bevorzugter Ausführung aus der Ebene des Deckels abgekantet, also ebenfalls mit diesem einstückig. Deckelrand und anschließender Deckel begrenzen erfindungsgemäß an den Kanten der Wandteile mit diesen Strömungswege zur Luftzirkulation für den Zelleninneraum. Bevorzugt schließt der parallel zu dem eines Frontdeckels verlaufende Deckelrand eines Heckdeckels mit diesem einen Winkel von mehr als 90° ein.

Die Scharniere sind so angebracht, daß der Schließvorgang vereinfacht wird. So verläuft etwa die Scharnierachse des an einem Wandteil -- insbesondere der Rückwand -- angelenkten (Heck-) Deckels unterhalb der Ebene der Oberkante des Wandteils, bevorzugt aber in (größerem) Abstand unterhalb dieser Oberkante innerhalb des Deckelrandes. Dazu können in der Rückwand der Raumzelle Ausschnitte zur Aufnahme von Scharnierlaschen vorgesehen sein.

Nach einem weiteren Merkmal der Erfindung befindet sich die Scharnierachse des im Bereich des Rinnenträgers angeordneten Gelenkes für den zweiteilig ausgebildeten Deckel oberhalb der Rinnenöffnung.

Bevorzugt und weiterbildungsgemäß ist ferner die Scharnierlasche parallel zum Heckdeckel festgelegt und mit ihrem ein Auge für die Scharnierachse aufweisenden freien Ende gekrümmt ausgebildet. Weiterbildungsgemäß kann außerdem die Scharnierlasche auf einem schienenartigen Träger der Rückwand festgelegt sein.

Um das Bewegen des Deckels zu erleichtern, ist dieser bzw. der Firstabschnitt parallel zu seiner Seitenwand innerhalb des Zelleninnenraums in Abstand zum Wandteil mit einem Verstärkungsprofil versehen, an dem ein Ende wenigstens eines Kraftspeichers, insbesondere einer Gasfeder, angelenkt ist, der/die sich andernends am benachbarten Wandteil abstützt. Dazu bietet letzteres eine querschnittlich horizontale Schulter an; oberhalb der Oberkante der vom Schürzenabschnitt ergänzbaren Frontwand ist diese Schulter bei einer Ausgestaltung in die Innenfläche der Seitenwand eingeformt; sie verläuft nahe jener Oberkante und unterhalb des Rinnenträgers horizontal und dazwischen geneigt.

Bei einem anderen Ausführungsbeispiel findet sich unterhalb der Oberkante der Seitenwand in deren Innenfläche die Schulter als Teil einer Einformung, die von der Frontwand aus horizontal verläuft und hinter dem Rinnenträger endet.

Als günstig hat es sich erwiesen, daß die Schulter zumindest teilweise ein hinterschnittenes Profil als Anschlußelement für die Gasfeder od. dgl. Anbauteile trägt.

Die erfindungsgemäße Deckelkonstruktion bietet also die folgenden Vorteile an:
* eine Deckeloberfläche mit Gefälle sowie Wasserablauf nach vorn und hinten, wodurch jede Wasserlachenbildung auf den Deckeln verhindert wird, ebenso Sturzwasser in dem über den Schaltanlagen liegenden Rinnenträger beim Öffnen des Frontdeckels;
* einen Frontdeckel aus Blech mit erhöhter Stabilität durch die Konstruktion aus einem Stück;
* die Scharnierausbildung des Heckdeckels bietet den Drehpunkt innerhalb der dreiseitig umlaufenden, gleichen Deckelrandausbildung an; durch einen zusätzlichen Bug des dortigen Deckelbleches im hinteren Bereich entsteht eine völlige Abdeckung des dortigen Scharniers gegen Zugänglichkeit von außen;
* die Bedienung der Deckel ist am Frontdeckel durch ein Kompaktstationsschloß mit Drehgriff und Schließzylinder verbessert, am Heckdeckel durch eine dreifache Schiebe-/Drehverriegelung;
* die senkrechte Abkantung des Deckelrandes ergibt einen ausreichenden Abstand der Wasserabtropfkante von der Stationswand, um eine gute Wirksamkeit der Rundumentlüftung durch optimierte Luftführung zu ermöglichen; zudem ist dadurch zusätzlich die Handhabung des Heckdeckels beim Schließvorgang erleichtert;
* das optische Erscheinungsbild erfaßt:
   - Verkleinerung der Deckelfläche durch Gefälleausbildung, dadurch auch optische Reduzierung der Stationshöhe;
   - gestalterische und funktionelle Einheit des Deckels;
   - harmonisierte Ansicht durch einheitliche, dreiseitig umlaufende Ausbildung des Deckelrandes mit geradlinigem Übergang in den senkrechten Schürzenabschnitt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: eine Schrägsicht auf eine vor einem Wohnhaus angeordnete, nicht begehbare Transformatorenstation mit zwei als Überdachung dienenden Deckeln in geschlossenem Zustand;
- Fig. 2:: die Frontansicht der Trafostation mit einem gestrichelt angedeuteten untertägigen Teil;
- Fig. 3:: eine Seitenansicht zu Fig. 2;
- Fig. 4:: eine Schrägsicht auf die Trafostation mit geöffnetem Frontdeckel;
- Fig. 5:: einen Querschnitt durch die geschlossene Trafostation, geschnitten nach Linie V-V in Fig. 6;
- Fig. 6:: die Draufsicht auf die Trafostation ohne Deckel;
- Fig. 7:: den gegenüber Fig. 1 bis 6 vergrößerten Querschnitt durch eine andere Ausgestaltung der Trafostation mit Front- und Heckdeckel;
- Fig. 8:: einen vergrößerten Teilschnitt aus Fig. 7 nach deren Linie VIII-VIII;
- Fig. 9:: einen Teilquerschnitt durch eine andere Trafostation mit einem Scharnierbereich des Frontdeckels als Zenit der Abdeckung, von dem sowohl der Frontdeckel als auch ein Heckdeckel abwärts geneigt verlaufen;
- Fig. 10:: ein vergrößertes Detail aus Fig. 9 nach deren Pfeil X;
- Fig. 11:: ein vergrößertes Detail aus Fig. 10 nach deren Pfeil XI;
- Fig. 12:: die Draufsicht auf ein Kompaktschloß, das in den Frontdeckel bei Pfeil XII eingesetzt ist;
- Fig. 13:: eine andere Ausgestaltung der Abdeckung der Trafostation im Querschnitt;
- Fig. 14 bis Fig. 17:: Teilquerschnitte durch Fig. 13 nach deren Linien XIV-XIV bis XVII-XVII;
- Fig. 18:: eine Darstellung des Bereiches der Fig. 17 in anderer Betriebsstellung;
- Fig. 19:: einen Horizontalschnitt durch eine Ecke der Umspannstation;
- Fig. 20:: einen Vertikalschnitt durch Fig. 19 nach deren Linie XX-XX;
- Fig. 21:: eine Schrägsicht auf eine Doppelstation.

Eine teilweise im Erdreich zu versetzende, nicht begehbare Umform- oder Transformatorenstation 10 der maximalen Sichthöhe h von etwa 1.000 mm über Erdoberkante 12 ist unter dieser in einer Frontwand 14 mit Durchführungen 16 für nicht dargestellte Kabel versehen.

Nahe der Frontwand 14 einer Länge a von 2.500 mm und einer Sichthöhe b von etwa 150 mm ist innenseitig eine Mittelspannungsanlage 18 angeordnet, neben dieser eine Niederspannungsanlage 19 sowie hinter diesen beiden ein Transformator 20.

An die Frontwand 14 schließen parallele Seitenwände 22 der Länge e von 2.300 mm, die durch eine Rückwand 24 verbunden sind; Seitenwände 22 und Rückwand 24 sind zusammen mit der Frontwand 14 und einer Bodenplatte 26 monolithisch aus Beton gegossen. Die Gesamthöhe f der Seiten- und Rückwände 22, 24 entspricht etwa jener Seitenlänge e.

Nach oben hin ist die Trafostation 10 durch einen Frontdeckel 28 sowie einen diesen ergänzenden Heckdeckel 30 geschlossen, die beide -- wie vor allem Fig. 5 verdeutlicht - - gleichsinnig zur Rückwand 24 hin aufzuklappen sind; an dieser sind Scharniere 32 für den Heckdeckel 30 festgelegt.

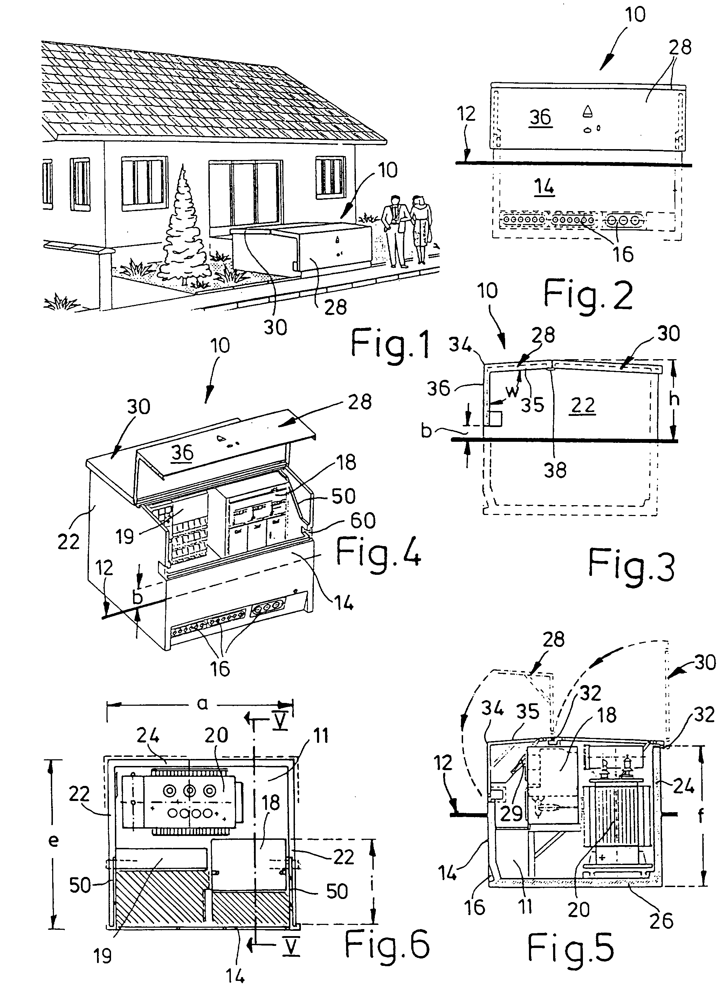

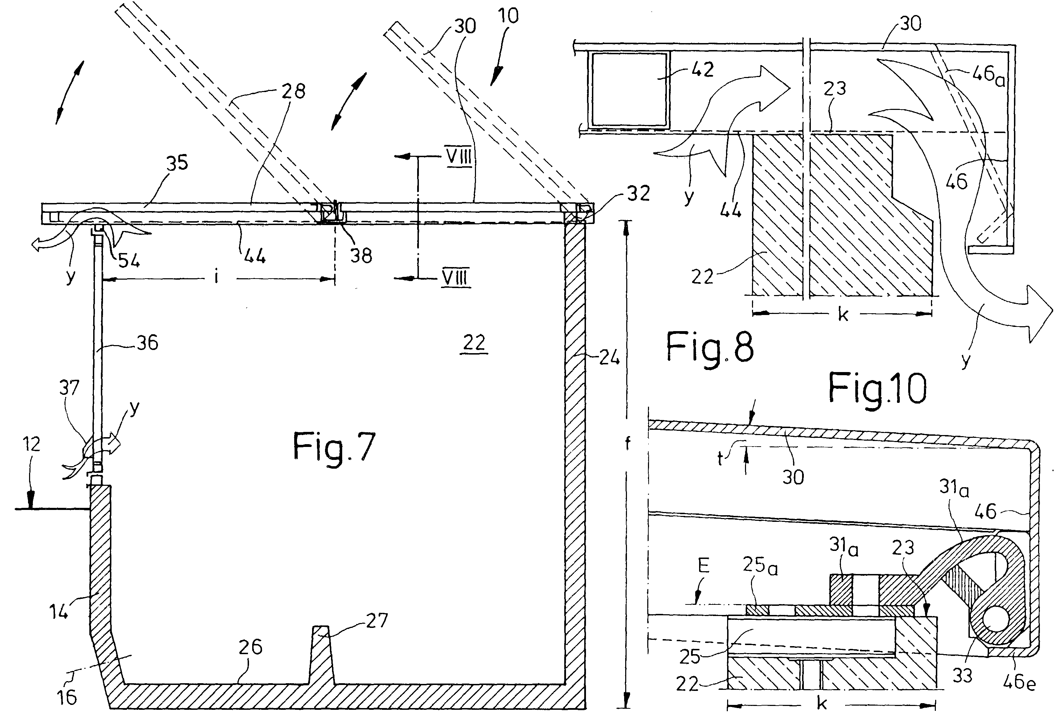

Der Frontdeckel 28 ist in den Fig. 1 bis 5 aus einer einzigen Leichtmetallplatte hergestellt, die in einem Abkanwinkel w von etwas mehr als 90° in einen vom Bereich der Scharniere 32 zu einer Frontkante 34 abwärts geneigten Firstabschnitt 35 und einen Schürzenabschnitt 36 geteilt ist; letzterer ergänzt in geschlossenem Zustand die Frontwand 14. Der Firstabschnitt 35 ist durch die Scharniere 32 an einen -- den Stationsinnenraum 11 querenden -- Rinnenträger 38 angeschlossen, der in einer Ausführung der Fig. 7 über einer mit der Bodenplatte 26 monolithisch vergossenen Bodenschwelle 27 und in einem mittleren Abstand i von etwa 1.100 mm zur Frontwand 14 verläuft.

Beide Deckel 28, 30 sind über Gasfedern 29 an den Seitenwänden 24 abgestützt und gegenüber diesen leicht bewegbar. Die Entlüftung geschieht zum einen mittels Durchlässen 37 am unteren Rand des Schürzenabschnittes 36, zum anderen unterhalb des Firstabschnittes 35 gemäß den Pfeilen y. Diese symbolisieren beispielsweise in Fig. 8 die Luftströme zwischen Heckdeckel 30 und Oberkante 23 der Seitenwand 22, deren Dicke k hier 100 mm mißt.

Der durch Kastenprofile 42 verstärkte und mit einem Luftgitter 44 ausgestattete Heckdeckel 30 ist seitlich mit einem Vertikalrand 46 L-förmigen Querschnittes -- oder einem in Fig. 8 gestrichelt angedeuteten geneigten Deckelrand 46a -- versehen.

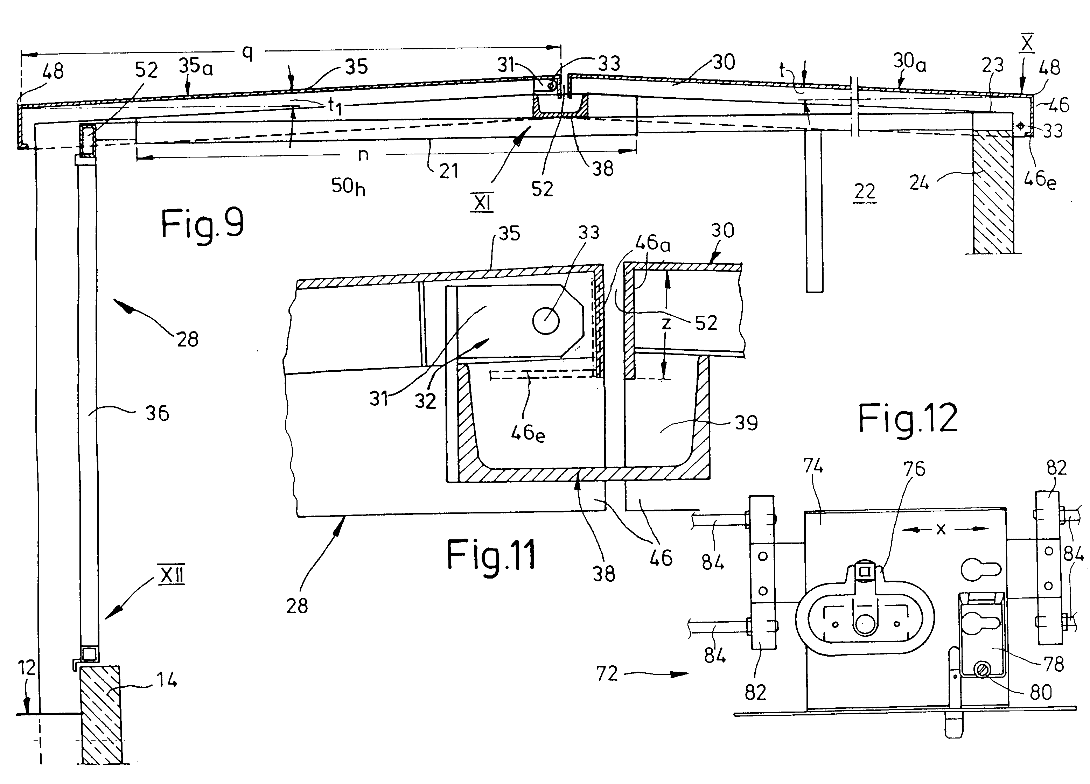

Das Ausführungsbeispiel der Fig. 9 enthält eine Einformung 21 mit etwa horizontaler Schulter 50ₕ der Länge n von 1.200 mm im Beton der Seitenwand 22 mit eingelegtem Rinnenträger 38. Hier sind besonders deutlich die Neigungswinkel t,t₁ von etwa 3° bis 5° der beiden Deckel bzw. Deckelabschnitte 30,35 -- und damit ihrer Deckeloberflächen 30ₐ,35ₐ -- erkennbar. Ebenfalls wird deutlich, daß der Rinnenträger 38 zum Abführen möglicherweise zwischen die beiden Deckel 28, 30 eindringenden Wassers dient; der Rinneninnenraum 39 untergreift den zwischen beiden Deckeln 28, 30 bestehenden Dachspalt 52.

Hier ist im übrigen der Frontdeckel 28 -- wie auch jener der Fig. 7 -- aus zwei getrennten Teilen 35, 36 hergestellt; der Schürzenabschnitt 36 hängt fest an einem Rechteckprofil 54, das mit dem Firstabschnitt 35 verbunden ist. Die Breite q dieses Firstabschnitts 35 mißt 1,325 mm, ist also etwas länger als jene Betoneinschnittlänge n.

Fig. 10 zeigt die Scharnierstelle X nach Fig. 9 mit auf der Oberkante 23 der Rückwand 24 -- unter Zwischenschaltung einer Edelstahlschiene 25 -- horizontal auf einer Zwischenplatte 25ₐ festliegender Scharnierlasche 31ₐ. Diese ist außerhalb der Zwischenplatte 25ₐ gekrümmt und bietet unterhalb der Oberfläche der Zwischenplatte -- Ebene E -- ein horizontales Auge 32ₐ für die deckelseitige Scharnierachse 33 an. Die Scharnierlasche 31ₐ endet oberhalb einer Umkantung 46ₑ des hinteren Vertikalrandes 46.

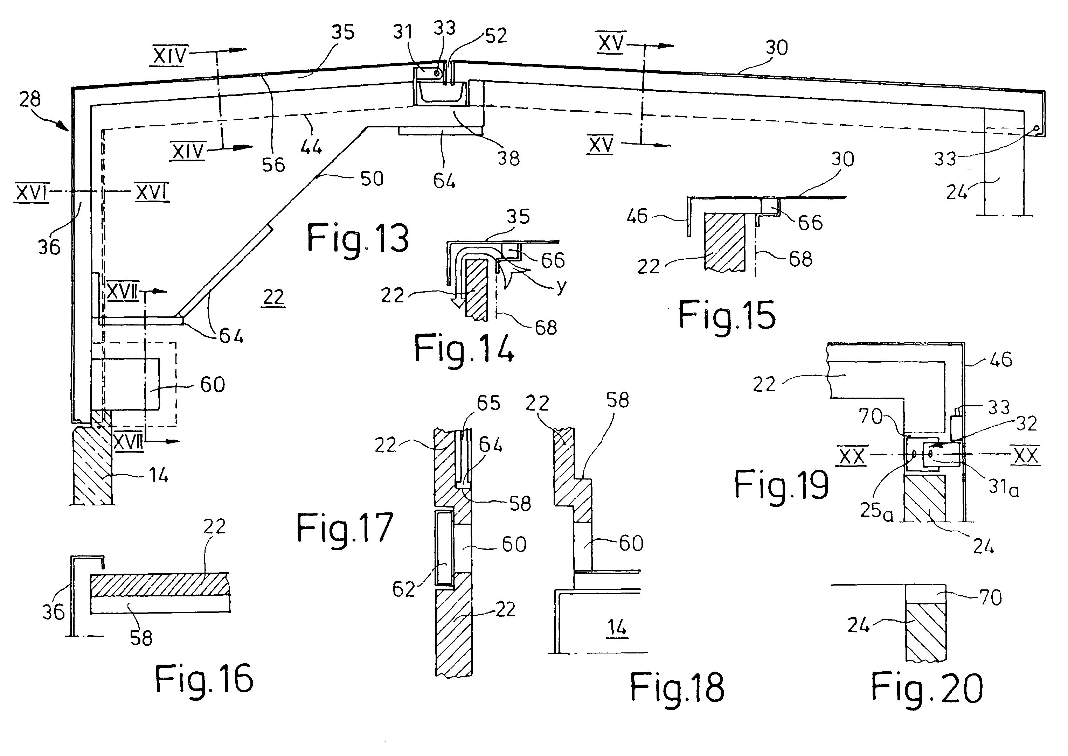

Der Frontdeckel 28 der Fig. 13 ist wiederum aus einer einzigen Leichtmetallplatte 56 gebogen. Auch bei diesem ist -- wie bei der Ausgestaltung nach Fig. 9 -- der Vertikalrand 46 im Bereich der Rinnenöffnung von gekürzter Höhe z (s. 46ₐ in Fig. 11).

In der Seitenwand 22 verläuft zur Frontwand 14 hin eine geneigte Schulter 50, die besonders gut in Fig. 4 zu erkennen ist. Unterhalb deren ist ein taschenartiger Randeinschnitt 60 vorgesehen, der durch einen Seitendeckel 62 geschlossen ist. Auf der geneigten Schulter 50 verlaufen hinterschnittene Profile 64 mit Aufnahmenut 65.

Insbesondere die Fig. 13 bis 19 lassen den von den entsprechenden Wandteilen 14,22,24 einerseits sowie den in Abstand gegenüberstehenden Deckeln 28,30 und Deckelrändern 46 begrenzten Strömungsraum für die Belüftung erkennen (Pfeil y in Fig. 14).

Die Fig. 14 und 15 zeigen an den Deckelabschnitten 30, 35 innerhalb der Seitenwand 22 jeweils ein Hohlprofil 66, von dem eine Achse 68 als Anlenkbereich für die erwähnte Gasfeder 29 abragt. Zudem sind in den Fig. 19 und 20 Ausschnitte 70 in der Rückwand 24 zum Festlegen der Scharnierlaschen 31ₐ skizziert; diese Ausschnitte sind in der Rückwand 24 dreifach vorhanden.

Der Schürzenabschnitt 36 beider dargestellter Ausführungsbeispiele enthält zum lösbaren Anschluß an die darunterliegende Frontwand 14 ein Kompaktschloß 72, wie es in Fig. 12 angedeutet ist. An einer Schloßplatte 74 ist ein Drehgriff 76 gelagert, neben ihm ist ein Schloßkasten 78 mit PVC-Rosette 80 für einen Schließzylinder zu erkennen. Beidseits der Schloßplatte 74 ist jeweils ein in Schubrichtung x bewegbarer Verriegerungswinkel 82 als Lager für ein Paar von Verriegelungsstangen 84 zugeordnet; deren Führungen am Schürzenabschnitt sind in der Zeichnung vernachlässigt.

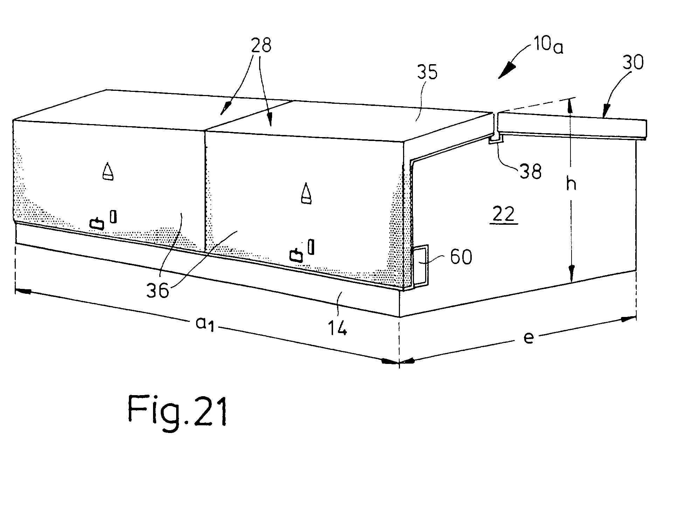

Mehrere der beschriebenen Raumzellen 10 können zu einer Baueinheit nebeneinander angeordnet und einstückig hergestellt sein, wie die Fig. 21 anhand einer Doppelzelle 10ₐ wiedergibt, deren Länge a₁ etwas mehr als 400 cm und deren Breite e etwa 230 cm betragen.

## Patentansprüche

1. Transportable Raumzelle in Form einer teilweise in Erdreich abgesenkten, einen Innenraum für einen Transformator, für Hoch-, Mittel- und/oder Niederspannungsschaltgeräte od. dgl. Anlagenteile (18, 19) enthaltenden Umspannstation mit vier Wandteilen (14, 22, 24), die gegebenenfalls monolithisch mit einer Bodenplatte (26) verbunden sind, sowie mit einer Überdachung aus beidseits eines den Stationsinnenraum (11) übergreifenden, sich nach oben öffnenden Rinnenträgers (38) angeordneten und getrennt um zueinander parallele Gelenke (32) schwenkbaren Deckeln (28,30), welche mit Lüftungsschlitzen (37) versehen sind und/oder mit dem ihnen zugeordneten Wandteil (14, 22, 24) einen Strömungsweg vom/zum Zelleninnenraum (11) begrenzen, wobei einer der Deckel (28) mit einem Firstabschnitt (35) am Rinnentrager (38) angelenkt ist und einen zur Ebene des Firstabschnittes (35) abgewinkelten Schürzenabschnitt (36) aufweist, der in geschlossenem Zustand der Umspannstation (10) den oberen Teil eines Wandteils (14) bildet, sowie der andere Deckel (30) an der dem Schürzenabschnitt gegenüber liegenden Wandteil (24) angelenkt ist und mit den Oberkanten (23) zugeordneter Wandteile (22, 24) wenigstens einen Strömungsweg begrenzen.

2. Raumzelle nach Anspruch 1, wobei die Deckel (28,30) vom Rinnenträger (38) zu den diesen parallelen Wandteilen (14,24) abwärts und gegenläufig geneigt sind.

3. Raumzelle nach Anspruch 1 oder 2, wobei am Deckel (30) bzw. am Firstabschnitt (35) ein Ende wenigstens eines Kraftspeichers (29) angelenkt ist, der sich andernends am benachbarten Wandteil (22) abstützt.

4. Raumzelle nach Anspruch 3, wobei am Deckel (30) bzw. der Firstabschnitt (35) parallel zu seiner Seitenwand (46) innerhalb des Zelleninnenraums (11) in Abstand zum Wandteil (22) mit einem Verstärkungsprofil (66) für den Kraftspeicher (29) versehen ist.

5. Raumzelle nach einem der Ansprüche 1 bis 4, wobei bei dem den Schürzenabschnitt (36) aufweisenden Deckel (28) zwischen dessen Firstabschnitt (35) und dem Schürzenabschnitt wenigstens ein Lüftungsschlitz verläuft.

6. Raumzelle nach einem der Ansprüche 1 bis 5, wobei oberhalb der Oberkante der vom Schürzenabschnitt (36) ergänzbaren Frontwand (14) in die Innenfläche der Seitenwand (24) eine Schulter (50) eingeformt ist, die nahe jener Oberkante und unterhalb des Rinnenträgers (38) horizontal und dazwischen geneigt verläuft.

7. Raumzelle nach einem der Ansprüche 1 bis 6, wobei unterhalb der Oberkante der Seitenwand (24) in deren Innenfläche eine Schulter (50ₐ) als Teil einer Einformung (21) von der Frontwand (14) horizontal verläuft und hinter dem Rinnenträger (38) endet.

8. Raumzelle nach einem der Ansprüche 1 bis 7, wobei oberhalb der Oberkante ihrer vom Schürzenabschnitt (36) ergänzbaren Frontwand (14) in die Außenfläche der Seitenwand (24) ein taschenartiger Randeinschnitt (60) eingeformt ist.

9. Raumzelle nach einem der Ansprüche 1 bis 8, wobei am Schürzenabschnitt (36) des Frontdeckels (28) ein Kompaktschloß (72) mit Drehgriff (76) und Schließzylinder als Schließorgan vorgesehen ist.

10. Raumzelle nach Anspruch 9, wobei am Heckdeckel (30) eine dreifache Schiebe/Drehverriegelung vorgesehen ist.

11. Raumzelle nach wenigstens einem der Ansprüche 1 bis 10, wobei mehrere Raumzellen als Baueinheit (10ₐ) nebeneinander angeordnet sind.

## Claims

1. Transportable room cell in the form of a transformer station partially lowered into the ground and containing an inner room for a transformer, for high, medium and/or low-tension switching equipment or the like plant parts (18, 19), with four wall portions (14, 22, 24) which if necessary are monolithically connected to a floor slab (26), and with a roof consisting of covers (28, 30) which are arranged on both sides of an open-topped gutter carrier (38) overlapping the inner room (11) of the station and are pivotable separately about joints (32) parallel to each other and which are provided with ventilation slots (37) and/or with the associated wall portion (14, 22, 24) define a flow path from/to the inner room (11) of the cell, wherein one of the covers (28) is linked by the ridge section (35) to the gutter carrier (38) and comprises a skirt section (36) which is at an angle to the plane of the ridge section (35) and which in the closed state of the transformer station (10) forms the upper portion of a wall portion (14), and the other cover (30) is linked to the wall portion (24) opposite the skirt section and with the upper edges (23) of associated wall portions (22, 24) defines at least one flow path.

2. Room cell according to claim 1, wherein the covers (28, 30) are inclined downwards and in opposite directions from the gutter carrier (38) to the wall portions (14, 24) parallel to the latter.

3. Room cell according to claim 1 or 2, wherein linked to the cover (30) or to the ridge section (35) is one end of at least one energy storing device (29) which is supported at the other end on the adjacent wall portion (22).

4. Room cell according to claim 3, wherein the cover (30) or the ridge section (35) parallel to its side wall (46) within the inner room (11) of the cell at a distance from the wall portion (22) is provided with a reinforcing profile (66) for the energy storing device (29).

5. Room cell according to any of claims 1 to 4, wherein, in the case of the cover (28) comprising the skirt section (36), between its ridge section (35) and the skirt section runs at least one ventilation slot.

6. Room cell according to any of claims 1 to 5, wherein, above the upper edge of the front wall (14) which can be made up by the skirt section (36), in the inner surface of the side wall (24) is formed a shoulder (50) which runs horizontally near that upper edge and below the gutter carrier (38) and at an angle in between.

7. Room cell according to any of claims 1 to 6, wherein below the upper edge of the side wall (24) in its inner surface a shoulder (50ₐ) as part of a recess (21) runs horizontally from the front wall (14) and ends behind the gutter carrier (38).

8. Room cell according to any of claims 1 to 7, wherein above the upper edge of its front wall (14), which can be made up by the skirt section (36), in the outer surface of the side wall (24) is formed a pocket-like edge incision (60).

9. Room cell according to any of claims 1 to 8, wherein on the skirt section (36) of the front cover (28) is provided a compact lock (72) with rotary knob (76) and lock cylinder as the locking member.

10. Room cell according to claim 9, wherein on the rear cover (30) is provided a triple sliding/turning locking system.

11. Room cell according to one or more of claims 1 to 10, wherein several room cells are arranged adjacent to each other as a unit (10ₐ).

## Revendications

1. Cellule transportable sous forme d'un poste de transformation, partiellement enfoui dans le sol, contenant un espace intérieur pour un transformateur et pour des appareils de commutation ou équipements similaires (18, 19) à haute-, moyenne- et/ou basse tension, la cellule comportant quatre parties de parois (14, 22, 24), qui, le cas échéant, sont reliées d'une manière monolithique avec une plaque de fond (26), ainsi qu'une couverture composée de couvercles (28, 30) qui sont susceptibles de pivoter autour d'articulations (32) parallèles entre elles et séparées, et qui sont agencées de chaque côté d'un support (38) formant gouttière qui s'ouvre vers le haut et qui passe au-dessus de l'espace interne (11) du poste, les couvercles (28, 30) étant prévus avec des passages d'aération (37) et/ou délimitant un trajet d'écoulement de/pour l'espace interne (11) de la cellule avec la partie de paroi (14, 22, 24) qui leur est associée, l'un des couvercles (28) étant articulé au support formant gouttière (38) avec une partie de faîtage (35) et présentant une partie de tablier (36) repliée par rapport au plan de la partie de faîtage (35), et qui forme, en position fermée du poste de transformation (10), la partie haute d'une partie de paroi (14), tandis que l'autre couvercle (30) est articulé sur la partie de paroi (24) située à l'opposé de la partie de tablier et délimite avec les parties de paroi (22, 24) associées au bord supérieur (23), au moins un trajet d'écoulement.

2. Cellule selon la revendication 1, dans laquelle les couvercles (28, 30) sont inclinés vers le bas et en sens opposé à partir du support formant gouttière (38) vers les parties de paroi (14, 24) qui sont parallèles au support.

3. Cellule selon la revendication 1 ou 2, dans laquelle une extrémité d'au moins un accumulateur de force ou organe exerçant une force de précontrainte (29), est articulée au couvercle (30) ou à la partie de faîtage (35), l'accumulateur de force (29) s'appuyant à l'autre extrémité sur la partie de paroi (22) voisine.

4. Cellule selon la revendication 3, dans laquelle est prévu un profil de renforcement (66) pour l'accumulateur de force (29) situé sur le couvercle (30) ou la partie de faîtage (35), parallèlement à sa paroi latérale (46), à l'intérieur de l'espace interne (11) de la cellule et à distance de la partie de paroi (22).

5. Cellule selon l'une des revendications 1 à 4, dans laquelle, sur le couvercle (28) présentant la partie de tablier (36), s'étend au moins un passage d'aération, entre la partie de faîtage (35) du couvercle et la partie de tablier (36).

6. Cellule selon l'une des revendications 1 à 5, dans laquelle un épaulement (50) est formé sur la surface interne de la paroi latérale (24), au-dessus du bord supérieur de la paroi frontale (14) complémentaire de la partie de tablier (36), l'épaulement (50) s'étendant à proximité de ce bord supérieur et sous le support (38) formant gouttière, horizontalement et incliné entre les deux.

7. Cellule selon l'une des revendications 1 à 6, dans laquelle un épaulement (50a), comme partie d'un moulage (21), s'étend de manière horizontale, sous le bord supérieur de la paroi latérale (24) dans la surface interne de celle-ci, à partir de la paroi frontale (14) et se termine derrière le support (38) formant gouttière.

8. Cellule selon l'une des revendications 1 à 7, dans laquelle un creux de bordure (60) en forme de poche est formé dans la surface externe de la paroi latérale (24), au-dessus du bord supérieur de la paroi frontale (14) de la cellule complémentaire de la partie de tablier (36).

9. Cellule selon l'une des revendications 1 à 8, dans laquelle une serrure compacte (72), avec une poignée tournante (76) et un cylindre de serrure est prévue comme organe de fermeture sur la partie de tablier (36) du couvercle (28) frontal.

10. Cellule selon la revendication 9, dans laquelle un triple verrouillage tournant/coulissant est prévu sur le couvercle (30) arrière.

11. Cellule selon au moins l'une des revendications 1 à 10, dans laquelle plusieurs cellules sont agencées comme unités modulaires (10a) les unes à côté des autres.
